# EUROPEAN PATENT SPECIFICATION

(11) **EP 1 295 448 B1**
(45) Date of publication and mention of the grant of the patent: **02.05.2007**
(21) Application number: 01945175.6
(22) Date of filing: 21.05.2001
(51) Int. Cl.: H04L 25/03, H04N 5/21

(54) **CHANNEL EQUALIZER**
KANALENTZERRER
EGALISEUR DE VOIE

(30) Priority: 12.06.2000 US 591870
(43) Date of publication of application: 26.03.2003
(73) Proprietor: Koninklijke Philips Electronics N.V., 5621 BA Eindhoven (NL)
(72) Inventor: WITTIG, Karl, NL-5656 AA Eindhoven (NL)
(74) Representative: Groenendaal, Antonius W. M.
(86) International application number: PCT/EP2001/005804
(87) International publication number: WO 2001/097475

(56) References cited:
- EP-A- 1 014 635
- US-A- 5 297 166
- US-A- 5 602 602
- US-A- 5 841 484

## Description

The invention relates to a method of processing sequential sets of data, each respective one of the sets comprising a respective data sequence, and at least a first one of the sets comprising a training sequence.

It also relates to a corresponding data processing device for carrying out such a method.

The invention is relevant to the processing of digitally encoded audio and video data that is distorted during transmission over a communication channel.

Digital video or audio data transmitted over a communication channel, from a sender to a receiver, is subjected to distortion and multipath errors. At the receiver, compensation of these effects can be achieved through properly filtering the received corrupted data before creating output data therefrom.

In a "trained mode" process, the transmitted data comprises a training sequence, which is transmitted, on the sender side as a part of the data. On the receiver side, the received data is distorted and the received training sequence is also distorted. The received training sequence is processed and results in an output training sequence. The processing is performed so that distortions are partly removed in the output training sequence and so that the training sequence after processing emulates the training sequence as originally transmitted. One skilled in the art can then reduce channel distortions of the received data by processing the received data using the process of the received training sequence.

Such a process is often called an equalization. In a "trained equalization", the result of the equalization of the training sequence is used for the equalization of the received data, see for example US-A-5 602 602.

The Advanced Television Systems Committee (ATSC) provides standards for digital High Definition Television (HDTV). The ATSC document A53 of September, 16^{th} 1995 describes an approved standard for digital television and the ATSC document A54 of October, 4^{th} 1995 gives indications on the use of this standard. The standard specifies specific training sequences that are incorporated in video signals transmitted over a terrestrial broadcast, cable or satellite channel. The ATSC document A54 discloses a method for adapting an equalizer's filter response to adequately compensate for channel distortions. In this known method, when the equalizer is first started, the equalizer's coefficients are usually not set to adequately compensate for the channel distortions. In order to force convergence of the equalizer coefficients, a known original training sequence is transmitted. An error signal is formed by subtracting a locally generated copy of the training sequence from the output of the adaptive equalizer. The coefficients are set so as to minimize the error signal and, after adaptation of the equalizer with the training signal, the equalizer is then used for filtering of the video signal.

It is an object of the invention to provide an efficient method of reducing distortions from a data signal. Another object of the invention is to provide a low-cost implementation of a device that carries out such a method.

To this end, the invention provides a method of processing sequential sets of data, each respective one of the sets comprising a respective data sequence, and at least a first one of the sets also comprising a training sequence, the method comprising:
- filtering the data sequence of the first set using a filter having adjustable filtering coefficients;
- while filtering the data sequence, processing the training sequence for deriving an optimum value for a specific one of the filtering coefficients;
- replacing a previous value of the specific filtering coefficient with the derived optimum value before filtering of another sequence of data.

In a method of the invention, the training sequence of the first set is used as a basis for the derivation of the optimum value of the specific coefficient that is used for the filtering of a next data sequence. In a method disclosed in the background art section, the derived optimum value of the specific coefficient is used for the filtering of the data sequence of the same set as to which the training sequence belongs. The training sequence is filtered and subsequently, the data sequence is in turn filtered. In contradistinction with a known method, in a method of the invention processing of a training sequence is carried out while filtering a data sequence. An advantage of the invention is that a greater length of time is available for the processing of the training sequence compared to a known method, wherein the training sequence is processed while the training sequence is actually being received. Therefore, in a method of the invention, more time is allowed for the derivation of optimum values of the filtering coefficients.

The invention also relates to a device for processing subsequent sets of data, each respective one of the sets comprising respective transmitted data, and at least a first one of the sets also comprising a training sequence, the processing device comprising:
- a filtering circuit having adjustable filtering coefficients for filtering the transmitted data of the first set;
- an updating circuit operative to derive an optimum value of at least one of the filtering coefficients by processing the training sequence, while filtering the transmitted data, and operative to replace a previous value of the filtering coefficient with the derived optimum value before filtering of the transmitted data of another one of the sets.

A device of the invention comprises the updating circuit for updating at least the specific filter coefficient while the filter is filtering a data sequence. In a known device, the equalizer is first only dedicated to the processing of the training sequence for adjusting coefficients so that an adequate equalization is performed. Then the device is dedicated to the processing of the data sequence, during which the coefficients obtained from the process of the training sequence are maintained. Specific hardware is associated with each coefficient to create updates of the coefficients during the equalization of the training sequence. An implementation of such an equalizer is relatively complex. In a device of the invention, the updating circuit is dedicated to the update of any of the coefficients. An advantage of a device of the invention is therefore to allow a reduced chip area implementation.

In the ATSC standard, the transmitted data "frame" constitutes of two fields, each of which consists of 313 "segments". Each segment in turn consists of 832 data symbols, of which a are used as a periodic synchronization pattern. Of these 313 segments, 312 are used to transmit actual MPEG-2 coded data, and the remaining segment is used to transmit the 700-bit training sequence. Consequently, less than 0.3% of the transmitted data is used for the equalizer training sequence. In so-called "trained" equalization modes, adaptation of the equalizer is performed only for the training sequence. This means that, if the training sequence is "captured" in storage memory and processed independently of the remaining transmitted data, as done in the invention, much more time is available to process the training sequence. Thus, a longer time is available to determine the equalizer configuration that best compensates for the channel distortions than if the adaptation were performed in real-time during the actual arrival of the training sequence.

The invention is therefore relevant to digital transmission systems in which static distortions and multipaths constitute most of the channel impairments. Under these circumstances, the adaptation functions of the equalizer can be implemented using a much simpler architecture than is found in conventional equalizers. This is because the training sequence is a small percentage of the transmitted data and because the static channel characteristics change by at most a very small amount in the interval between training periods. This allows the required computations to be performed over this larger interval, thereby using much less hardware than would otherwise be needed.

The invention is explained in further detail, by way of example, and with reference to the accompanying drawing, wherein:
Fig. 1 is a block diagram of a device of the invention;
Fig. 2 is a flowchart of a method of processing of the invention;
Fig. 3 is a diagram of a functional embodiment of a device of the invention;
Fig. 4 is a diagram of a functional embodiment of a coefficient updating circuit of the invention;
Fig. 5 is a diagram of a functional embodiment of a coefficient updating circuit of the invention;
Fig. 6 is a diagram of a functional embodiment of a device of the invention; and
Fig. 7 is a functional embodiment of a device of the invention.

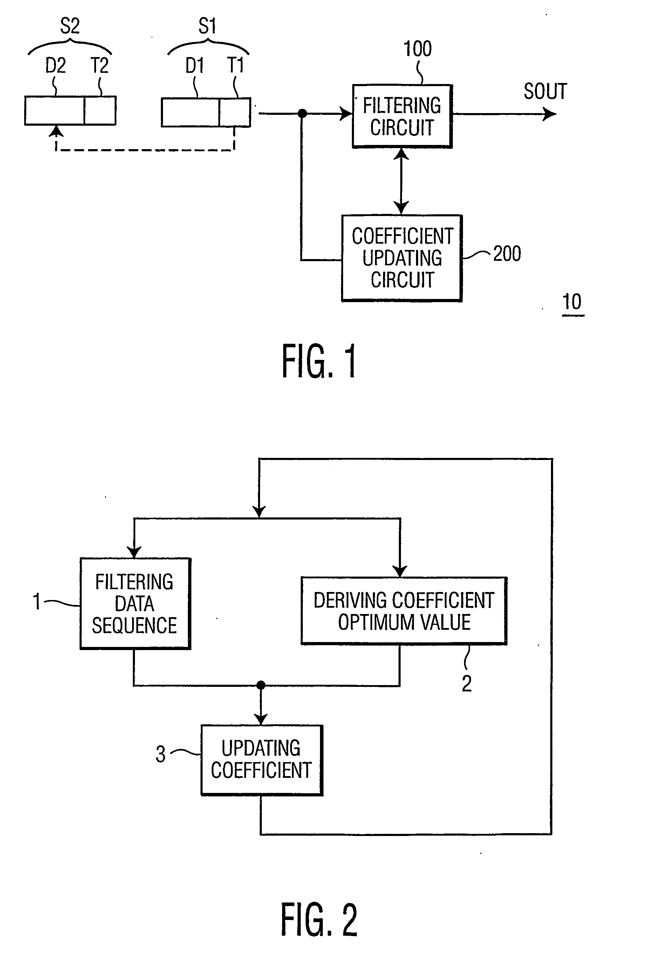

A data processing device 10 of the invention is given in Fig. 1. The device 10 receives sequential sets S 1, S2, ..., Si, ... of data and creates an output signal Sout. The sets Si are possibly transmitted from a sender or a base station to a receiver over a communication channel, such as for example, terrestrial broadcast, cable or satellite channel. The device 10 may be part of such a receiver. The sets Si are subjected to distortions when the characteristics of the communication channel vary. Channel distortion is of a static form when the characteristics of the channel are time-invariant. Channel distortion is of a quasi-static form when the characteristics of the channel are slowly varying and the channel distortion is of a dynamic form when the characteristics of the channel are rapidly varying. For example, in terrestrial broadcast transmission, both static and dynamic distortions are typically present.

A respective received set Si comprises a respective data sequence Di and possibly a respective training sequence Ti. Preferably, the training sequence Ti constitutes a very small percentage of the transmitted set of data Si. In this embodiment of the invention, a set S1 comprises a training sequence T1, followed by a data sequence D1. A set S2 comprises a training sequence T2, followed by a data sequence D2. The sets S 1 and S2 may be parts of a data stream that has been partitioned in successive sets of data. The sets may be of same or different lengths.

The device 10 comprises a filter 100 having a number of m adjustable coefficients C1,...,Cm, whose values at discrete time t are C1(t),..., Cm(t).

The device 10 further comprises a coefficient updating circuit 200 for adjusting at least one of the coefficients C1,..., Cm. The circuit 200 updates a given coefficient Ck from an equalization of a received training sequence Ti as explained hereinafter.

The device 10 receives the set S 1 composed of the training sequence T1 and the subsequent data sequence D1. First, the training sequence Ti is supplied to the circuit 100 and to the circuit 200. The filter 100 filters the training sequence Ti. The circuit 200, when receiving the training sequence Ti, stores the sequence Ti in an internal memory. The data sequence Di is then supplied to the filter 100. While the filter 100 is filtering the data sequence D1, the circuit 200 processes the training sequence T1 for deriving an optimum value for at least a specific one of the coefficients Ck. The circuit 200 equalizes the training sequence T1. When the optimum value is derived and when the filtering of the data sequence D1 is terminated, the derived optimum value is supplied by the circuit 200 to the filter 100 and the coefficient Ck is updated with the derived optimum value. The next set S2 is then supplied to the filter 100 that filters the training sequence T2 and the data sequence D2 using the updated coefficient Ck.

Fig. 2 is a flowchart of a method of processing of the invention. A step 1 consists of filtering a received data sequence. A step 2 consists of deriving an optimum value for at least a specific one of the coefficients using a received training sequence that was transmitted in association with the data sequence that is currently being filtered. In a method of the invention, step 1 and step 2 overlap in time. Preferably, the time it takes to complete step 2 is shorter than a transmission period between two successive training sequences. Furthermore, since a training sequence is only a small part of the transmitted data, completing step 2 takes a shorter time than completing step 1. A next step 3 consists of updating at least the value of the specific coefficient with the optimum value derived in step 2. Once the update of the coefficients is performed, filtering of a new data sequence may be started.

A data sequence and a training sequence are each composed of successive digital data. In the following paragraphs, the expression "a value of the sequence" refers to "a value of a digital data of the sequence".

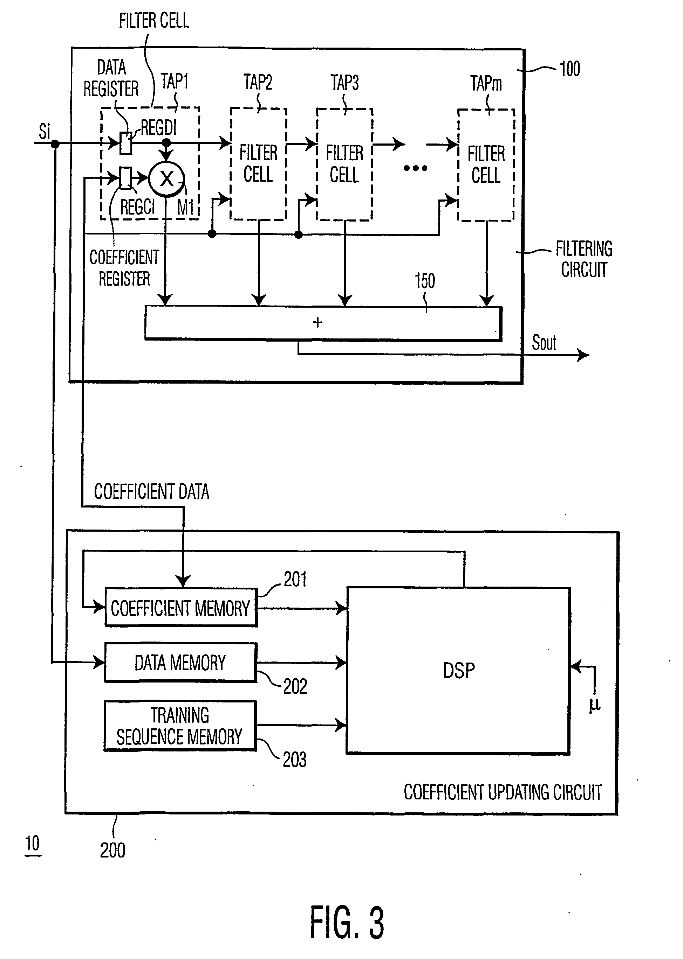

Fig. 3 is a diagram of a first functional embodiment of a device 10. The device 10 of the invention comprises the filtering circuit 100 and the coefficient updating circuit 200. The device 10 receives the successive sets Si and creates the output signal Sout.

In this first embodiment, the filter 100 comprises a number of m tap cells TAP1, TAP2,.., TAPm. Each respective cell TAPk is associated with a respective coefficient Ck. Each respective cell TAPk comprises a respective data register REGDk for storing a value of a data of the data sequence Di currently associated with the coefficient Ck. Each respective cell TAPk also comprises a respective coefficient register REGCk for storing a current value of the coefficient Ck. Each respective cell TAPk comprises a respective multiplier Mk.

The training sequence Ti has been previously filtered by the circuit 100 and the training sequence has been stored in an internal memory of the circuit 200. The training sequence Ti is composed of N successive data having values Ti(1), Ti(2), .., Ti(N).

When receiving a data sequence Di, the filter 100 receives, at a moment in time t, a value Di(t) of the data sequence Di. The digital data sequence Di is transmitted to the filter 100 and the values of the data sequence Di are stored in the cells of the filter 100 as follows. At a time t, the value Di(t) is received by the filter 100 and stored in the register REGD1 of a first filter cell. At a next time t+1, the value Di(t) is transferred from the register REGD1 to the register REGD2 of the second filter cell. Simultaneously, a next value Di(t+1) is received by the filter 100 and stored in the register REGD1 of the first cell. At a next time t+2, the value Di(t) is transferred from the register REGD2 to the register REGD3 of the third filter cell, the value Di(t+1) is transferred from the register REGD1 in the first cell to the register REGD2 of the second cell. At the same time, a next value Di(t+2) is received by the filter 100 and stored in the register REGD1, and so on.

At a given time t, in each cell TAPk, the multiplier Mk receives the value of the coefficient Ck stored in the register REGCk and the value of the data stored in the register REGDk. Each multiplier Mk calculates a product of the two received values and provides this product to an adder 150. The adder 150 calculates a sum of all the products received from the multipliers M1,..., Mm. The resulting sum is the value Sout(t) of the output signal Sout at the time t.

The circuit 200 of Fig. 3 comprises a coefficient memory 201 for storing values of the filter coefficients C1,...,Cm. The circuit 200 also comprises a data memory 202 for storing the values Ti(1),..., Ti(N) of the received training sequence Ti. An original training sequence, which is the version originally sent by the transmitter of the training sequence, is known in advance by the unit 200. The original training sequence is stored in a training sequence memory 203. The unit 200 further comprises a digital signal processing unit DSP for processing the received training sequence Ti and deriving an optimum value for a specific one Ck of the filtering coefficients.

In this first embodiment of the invention, the unit DSP performs an equalization of the training sequence Ti. The equalization of the sequence Ti comprises filtering the sequence Ti by means of the DSP unit using the values of the coefficients C1,...Cm stored in the memory 201. During the filtering of the sequence Ti by the DSP unit, the values of the coefficients C1,...,Cm stored in the memory 201 are repeatedly adjusted by the DSP unit so that the received training sequence Ti after equalization emulates the original training sequence stored in the memory 203. The optimum value of the coefficient Ck is the adjusted value of the coefficient Ck that can be retrieved from the memory 201 at the end of the equalization process.

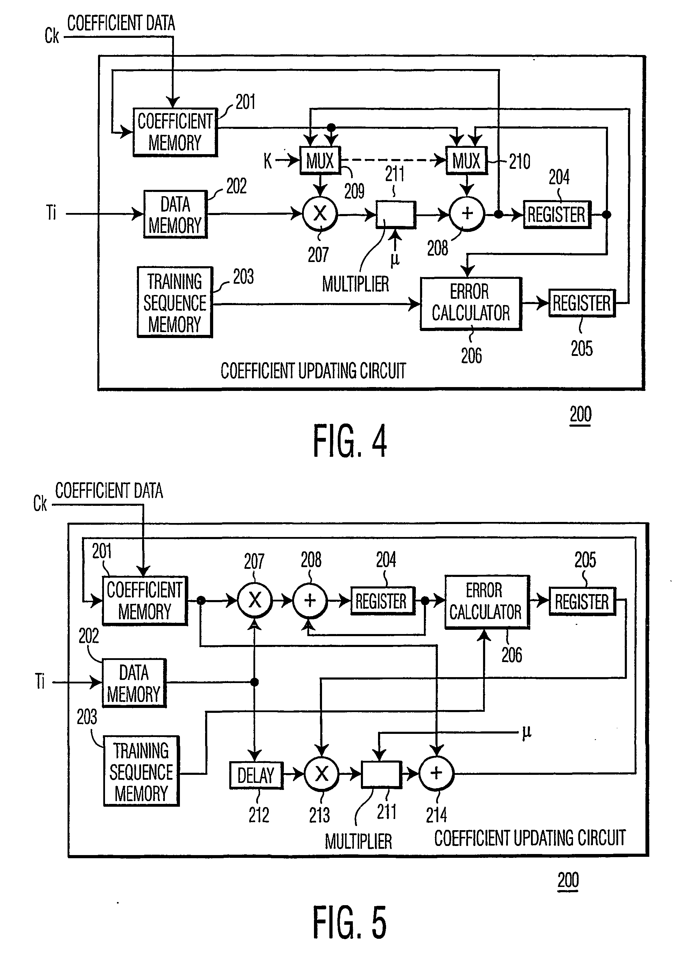

Fig. 4 is a diagram of a second functional embodiment of a coefficient updating circuit 200. In this second embodiment, the circuit 200 comprises the memory 201, the memory 202, the memory 203. The circuit 200 further comprises a multiplier 207, an adder 208, a multiplier 211, a multiplexer 209, a multiplexer 210, a register 204, a register 205 and an error calculator 206.

The circuit 200 filters the sequence Ti stored in the memory 202 using values of the coefficients C1,..., Cm stored in the memory 201 and creates a filtered training sequence FTi therefrom. During filtering of the sequence Ti, the coefficients C1,..., Cm in the memory 201 are repeatedly updated, as will be explained hereinafter, so that the filtered training sequence FTi emulates the original training sequence stored in the memory 203.

A value of the sequence FTi is calculated as a sum of products of a value of each respective coefficient Ck with a respective value Ti(k) of the training sequence Ti, as follows. Each product is calculated by the multiplier 207. The multiplier 207 receives the current value of a given coefficient Ck from the memory 201 through the multiplexer 209. A value of a parameter K is internally set so that the multiplexer 209 either provides the multiplier 207 with a value of a coefficient stored in the memory 201 or provides the multiplier 207 with a value stored in the register 205. The value of the parameter K can alternately take two different values and each value respectively results in one of the two possible configurations of the multiplexer 209. Similarly, regarding the value of the parameter K, the multiplexer 210 either provides the adder 208 with a value stored in the register 204 or provides the adder 208 with a value of a coefficient stored in memory 201. During calculation of a value of the sequence FTi, the parameter K is set so that the multiplexer 209 provides the multiplier 207 with a value of a coefficient stored in the memory 201 and so that the multiplexer 210 provides the adder 208 with the value stored in the register 204. The multiplier 207 also receives the value Ti(k) from the memory 202. The resulting product is transmitted to the adder 208 through the multiplier 211. During the calculation of a value of the sequence FTi, the multiplier 211 has no effect on a product provided by the multiplier 207. The adder 208 adds the derived product to a value stored in the register 204 and received through the multiplexer 210. The result of this addition is stored in the register 204 and replaces the value previously stored in the register 204. At the beginning of the calculation of the value of the signal FTi, a null value is stored in the -register 204. These calculations are done for all the coefficients C1,..., Cm and when all the products of each respective coefficient C1,...,Cm and a respective value of the training sequence Ti have been derived and summed, the temporary value stored in the register 204 is the value of the sequence FTi.

For example, in the calculation of a first value of the sequence FTi, a given coefficient Cj is multiplied by a value Ti(j) of the sequence Ti. Then, in the next calculation of a value of the sequence FTi, the coefficient Cj is multiplied by the value Ti(j+1) of the sequence Ti.

The value of the sequence FTi is then supplied to the error calculator 206. The calculator 206 derives an error signal E from the filtered training sequence FTi and the original training sequence stored in the memory 203. In this second embodiment of the invention, a value of the error signal E is derived as a difference between a value of the original training sequence stored in the memory 203 and the derived value of the sequence FTi. The value of the error signal E is then stored in the register 205.

A common algorithm for updating a coefficient is the Least Mean Square (LMS) algorithm which aims at minimizing the error signal E. According to the LMS algorithm, a coefficient Ck is updated with an updating amount derived as a product of a value of the training sequence Ti, a value of the error signal E and a step gain parameter µ.

During the update of the coefficient Ck, the parameter K is set so that the multiplexer 209 provides the multiplier 207 with the value of the error signal E stored in the register 205 and so that the multiplexer 210 provides the adder 208 with the current value of the coefficient Ck stored in the memory 201. The multiplier 207 also receives a value of the sequence Ti stored in the memory 202. In this embodiment, the multiplier 207 receives the value of the sequence Ti that was multiplied by Ck in the calculation of the value of the sequence FTi. The multiplier 207 performs a product of the two received values and supplies the resulting product to the multiplier 211 for deriving the updating amount. The multiplier 211 multiplies the received product by the step gain parameter µ, which has generally a small value. In a preferred embodiment, the step gain µ is of the form (½)ⁿ with n being a positive integer and the multiplier 211 can therefore comprise a barrel shifter. The value of the coefficient Ck currently stored in the memory 201 is, then, supplied through the multiplexer 210 to the adder 208. The adder 208 also receives the updating amount from the multiplier 211. The adder 208 derives an adjusted value of the coefficient Ck by adding the updating amount to the current value of the coefficient Ck. The adjusted value is then loaded in the memory 201 for replacing the current value of the coefficient Ck.

Thus, the multiplier 207, the multiplexers 209 and 210 and the adder 208 are used alternately for the derivation of a value of the filtered training sequence FTi and for the update of at least one coefficient Ck, therefore allowing an efficient use of the process resources.

In a preferred embodiment, when a value of the filtered training sequence FTi is derived and as a consequence when a value of the error signal E is derived, the coefficients C1,..., Cm are all updated one by one, before calculation of another value of the sequence FTi and of another value of the error signal E.

Fig. 5 is a diagram of a third functional embodiment of an updating circuit 200. In this embodiment, the circuit 200 comprises the multiplier 207, the adder 208, the register 204, the error calculator 206, the register 205 and the multiplier 211. The circuit 200 further comprises a delay cell 212, a multiplier 213 and an adder 214. The multiplier 207, the adder 208 and the register 204 allow the derivation of a value of the filtered training sequence FTi as explained in a previous paragraph. The error calculator 206 derives a value of the error signal E, which is stored in the register 205. The delay cell 212, the multiplier 213, the multiplier 211 and the adder 214 allow the derivation of the updating amount for the derivation of the coefficient Ck. This derivation of the updating amount is done in parallel to the derivation of the value of the filtered training sequence FTi. The multiplier 213 receives a value of the sequence Ti stored in the memory 202 through the delay cell 212 and the multiplier 213 receives the value of the error signal E stored in the register 205. The delay cell 212 introduces a delay between the output of the multiplier 207 for the calculation of the value of the sequence FTi and the input to the multiplier 213 for the derivation of the updating amount associated to Ck. The introduced delay is to compensate for the time-lag between the derivation of the values of the filtered training sequence FTi and the error signal E on the one hand, and the derivation of the updating amounts for the coefficients used for the derivation of the training sequence FTi on the other hand. The multiplier 213 calculates the product of the two received values and supplies the product to the multiplier 211 for deriving the updating amount. The current value of the coefficient Ck currently stored in the memory 201 is supplied to the adder 214, which also receives the updating amount from the multiplier 211. The adder 214 derives the adjusted value of the coefficient Ck by adding the updating amount to the current value of the coefficient Ck. The adjusted value is then loaded in the memory 201 for replacing the current value of the coefficient Ck. This third embodiment of the circuit 200 allows to derive simultaneously a value of the filtered training sequence and to update a coefficient Ck. This embodiment of the circuit 200 allows a faster process of the training sequence Ti than the embodiments shown in the previous Figures.

In a fourth functional embodiment of the circuit 200, the updating amount, regarding its dependency on the error signal E, only depends on the sign of the signal E. The updating amount, in this fourth embodiment, does not depend on the magnitude of the error signal E. In this embodiment, the multiplier 213 of the third embodiment of Fig. 5 may be replaced by a unit that multiplies the value of the sequence Ti by a binary signal representing the polarity of the value of the error signal E stored in the register 205. For example, this unit multiplies the digitized value of the sequence Ti by +1 when the value of the signal E is positive or null. The unit multiplies the digitized value of the sequence Ti by -1 when the value of the signal E is negative. Thus, the embodiment of Fig. 5 allows a fast processing of the training sequence Ti.

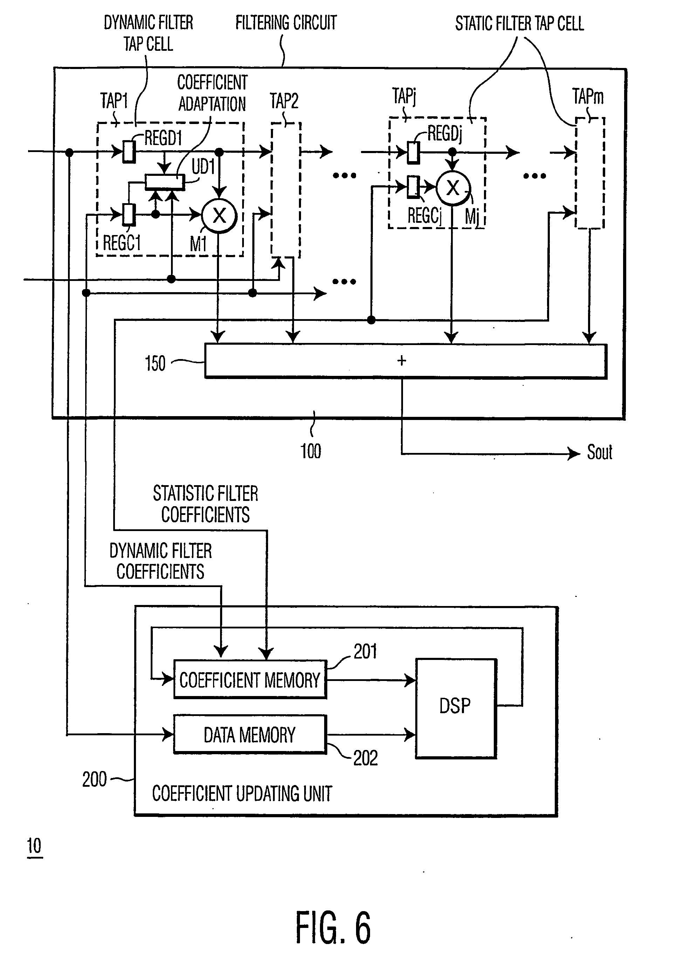

Fig. 6 is a diagram of another embodiment of the device 10. In this embodiment of the invention, the device 10 compensates for both highly dynamic channel impairments and static impairments. In this embodiment, the maximum multipath delay of dynamic impairments is substantially less than that of the static impairments for which the device 10 must compensate. In a digital filter, the first cells compensate for short delays impairments. Thus, a filter 100 of the device 10 comprises several first tap cells TAP1,..., TAPj-1 that compensate for dynamic distortions, hereafter referred to as dynamic tap cells. The filter 100 also comprises tap cells TAPj,..., TAPm that compensate for static distortions, hereafter referred to as static tap cells. The static cells TAPj,..., TAPm compensate for impairments with longer delays. Dynamic channel distortions can vary substantially between transmissions of two successive training sequences. Updating the coefficients of the dynamic tap cells TAP1,..., TAPj-1 using a trained equalization is therefore not adequate to compensate for these dynamic distortions. The dynamic coefficients C1,..., Cj-1 need to be updated in real time.

A set Si, composed of a training sequence Ti and a subsequent data sequence Di, is supplied to the device 10. This set Si has been subjected, while transmitted to the device 10, to dynamic and static distortions. The filter 100 filters the set Si and creates the output signal Sout.

Adaptation of the dynamic coefficients C1,..., Cj-1 must be performed from the data sequence Di in real time. The coefficients C1,..., Cj-1 may be updated according to a "blind mode". In "blind mode", a filter error signal Ef is derived from statistical properties of the signal Sout and the coefficients TAP1,..., TAPj-1 are iteratively updated in order to minimize this error signal Ef. The derivation of the signal Ef from the signal Sout is not shown in Fig. 6. Each respective one of the dynamic cells TAP1,..., TAPj-1 comprises a respective coefficient adaptation unit UD1,..., UDj-1. Each respective unit UD1,..., UDj-1 allows the calculation of an adjusted value of the corresponding coefficient C1,..., Cj-1 from the value of the filter error signal Ef and the value of the sequence Di currently stored in the respective register REGD1,..., REGDj-1. Updating of the dynamic coefficients is performed continuously during filtering of the sequence Di.

Adaptation of the static coefficients Cj,..., Cm is performed in the coefficient updating circuit 200 as described in a previous paragraph. The entire set of coefficients C1,..., Cm is stored in the memory 201. Once the sequence Ti is received, values of the dynamic coefficients currently stored in the registers REGC1,..., REGCj-1 of the filter 100 are stored in the memory 201. During processing of the sequence Ti by the circuit 200, the values of the dynamic coefficients C1,..., Cj-1 stored in the memory 201 are not modified and kept as stored at the starting of the process of the training sequence Ti. However, the values of the static coefficients Cj,..., Cm stored in the memory 201 are adjusted during the processing of the sequence Ti by the circuit 200 as explained previously. The values of the updated static coefficients obtained at the end of the processing of the training sequence may be transmitted to the filter 100 when filtering of the sequence Di is terminated and before filtering of a next data sequence.

In another embodiment of the invention, the entire set of static and dynamic coefficients C1,..., Cm is in a first stage entirely updated by means of the circuit 200 so that all the coefficients are compensated for static distortions. Then in a second stage, the dynamic coefficients C1,..., Cj-1 are updated in real time to compensate for dynamic distortions.

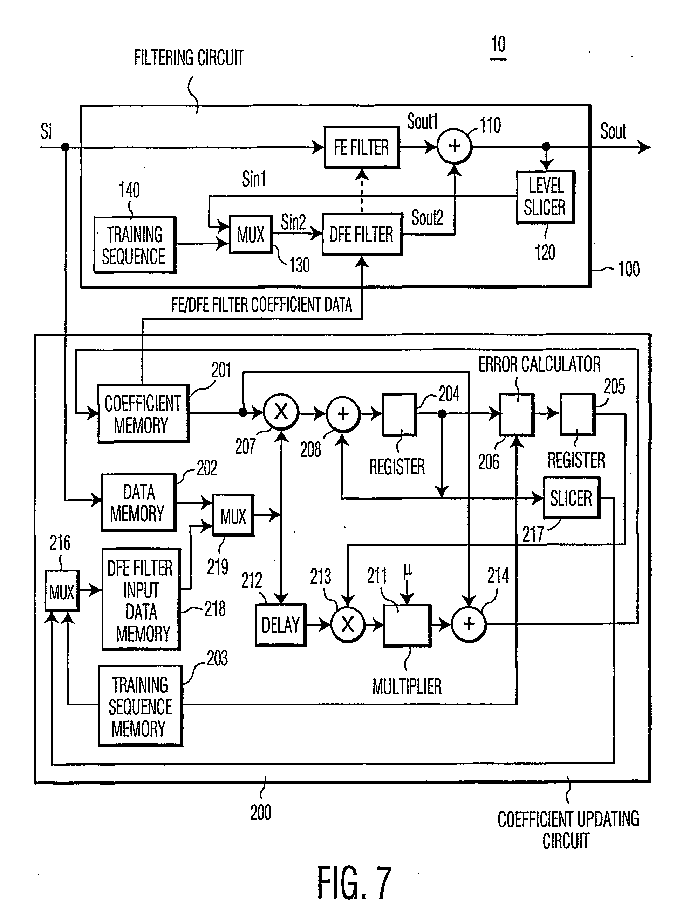

It is also within the scope of the invention to consider a device 10 comprising a filtering circuit 100 composed of a finite impulse FE filter operating in forward mode and a DFE filter operating in feedback mode. Fig. 7 is a functional embodiment of such a device 10. The FE filter receives the set Si and creates an output signal Sout1. The DFE filter receives an input signal Sin2 and creates an output signal Sout2. The output signal Sout of the filtering circuit 100 is the sum of the output signal Sout2 of the DFE filter and of the output signal Sout1 of the FE filter. The sum is calculated in an adder 110. The filtering circuit 100 comprises a level slicer 120 for creating a signal Sin1 from the signal Sout. In the slicer 120, the signal Sout is quantized, resulting in the signal Sin1, which can take a finite number of discrete values. The circuit 200 also comprises a memory 140 for storing the original training sequence. A multiplexer 130 supplies the DFE filter with the signal Sin2, which is either the training sequence stored in the memory 140 or the signal Sin1.

When receiving the set Si, the FE filter first receives the training sequence Ti, followed by the data sequence Di. While the FE is filtering the training sequence Ti, the original training sequence stored in the memory 140 is supplied through the multiplexer 130 to the DFE filter. Indeed, a filtering circuit 100 ideally removes all distortions from the sequence Si. If the circuit 100 totally removes distortions from the training sequence Ti, the result of filtering is the original training sequence. When the FE filter actually starts filtering the data sequence Di, the multiplexer 130 supplies the DFE filter with the signal Sin1.

The device 10 of Fig. 7 also comprises a coefficient updating circuit 200. The circuit 200 comprises the coefficient memory 201, the data memory 202, the multiplier 207, the adder 208, the register 204, the error calculator 206, the register 205, the delay cell 212, the multiplier 211 and the adder 214 as previously described. The coefficient memory 201 stores values of the coefficients of the FE filter and values of the coefficients of the DFE filter.

The circuit 200 further comprises a DFE filter input data memory 218 for storing values of the signal Sin2. The circuit 200 comprises a slicer 217 for creating values of the input signal Sin1 from values of the output signal Sout stored in the register 204. These values of the signal Sin1 are supplied to the memory 218 through a multiplexer 216. The memory 218 also stores values of the original training sequence supplied from the memory 203 through the multiplexer 216. A multiplexer 219 provides both the multiplier 207 and the delay cell 212 with a value of the training sequence Ti stored in the memory 202 or with a value of the signal Sin2 stored in the memory 218.

A value of the output signal Sout is a sum of a value of the output signal Sout1 and the output signal Sout2. A value of the signal Sout1 is calculated from the values of the coefficients of the FE filter stored in the memory 201 and from values of the sequence Ti stored in the memory 202. This value of the signal Sout1 is calculated by means of the multiplier 207, the adder 208 and the register 204 as explained in a previous paragraph. Then, a value of the signal Sout2 is calculated from the values of the coefficients of the DFE filter stored in the memory 201 and values of the signal Sin2 stored in the memory 218. The value of the signal Sout2 is derived by means of the multiplier 207, the adder 208 and the register 204 in a similar manner as explained before and with the register 204 initially loaded with the derived value of the signal Sout1. Then at the end of the calculations, the value of the output signal Sout may be retrieved from the register 204.

The error signal E is derived by the error calculator 206 and stored in the register 205.

The coefficients of the filtering circuit 100 stored in the memory 201 are updated by means of the delay cell 212, the multiplier 213, the multiplier 211 and the adder 214 in a similar manner as explained in a previous paragraph. When a specific coefficient of the DFE filter is updated, the multiplexer 219 provides the delay cell 212 with a value of the signal Sin2 stored in the memory 218. When a specific coefficient of the FE filter is updated, the multiplexer 219 provides the delay cell 212 with a value of the sequence Ti stored in the memory 202.

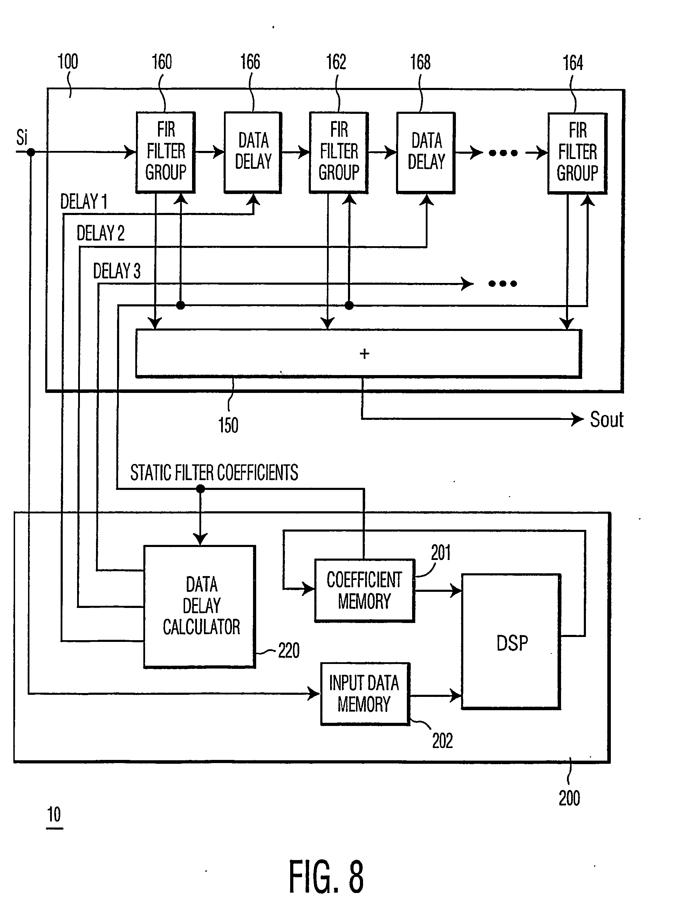

Fig. 8 is a preferred embodiment of a device 10 of the invention. In this preferred embodiment, the device 10 comprises a filter 100 that, itself, comprises several finite impulse response (FIR) filter groups. In Fig. 8 three filters 160, 162 and 164 are shown. These filters 160, 162 and 164 are placed in series. The filter 100 also comprises configurable data delay cells 166 and 168 that are placed between two consecutive FIR filters 160, 162, 164. Thus, the cell 166 is located between the FIR filters 160 and 162. The cell 168 is located between the FIR filters 162 and the next consecutive FIR filter. Such an embodiment of the filter 100 is described in the US patent 4,782,458. Such a filter 10 is used to compensate for static and quasi-static multipath echoes of the communication channel. The filters 160, 162 and 164 compensate for different multipath echoes, each of the echoes having a respective delay. The delay cells 166 and 168 introduce the respective delays delay1 and delay 2 in the filtering path between the FIR filters 160, 162 and 164. Rather than using a full length adaptive filter as shown previously, for the entire range of echo delays that can be expected, the filter 10 comprises the FIR filters 160, 162 and 164 with configurable data delay cells 166 and 168 between two successive FIR filters.

The device 10 of Fig. 8 further comprises a coefficient updating circuit 200. In this embodiment, the circuit 200 comprises a DSP unit for deriving the optimum values of the filtering coefficients as explained before. The circuit 200 also comprises the coefficient memory 201 and the input data memory 202, both described in previous embodiments. The circuit 200 of the embodiment of Fig. 8 comprises in addition to the circuit 200 of the embodiment of Fig. 3, a data delay calculator 220. The coefficient memory 201 stores values of coefficients of the filter 100 as if the filter 100 was a full length filter and not a series of FIR filters. Thus the coefficients stored in the memory 201 cover the total length of the filter 100. Because of the nature of the echoes in the communication channel, some coefficients stored in the memory 201 will have a very small value or will be zero. The delay calculator 220 allows to calculate the respective delays delay1, delay2 introduced by the respective delay cells 166 and 168. The calculator 220 derives these delays from the values of the coefficients stored in the memory 201. The coefficients stored in the memory 201 that correspond to the long-delays echoes of interest, which are the coefficients of the FIR filters 160, 162 and 164, are those having nonzero values above a minimum threshold. Theses coefficients are easily identified by the calculator 220 and their positions are immediately known. Their positions can then be used to determine the filters delays of the cells 166 and 168. The delays may be determined by counting the number of coefficients having values beneath the threshold between the sets of determined coefficients of two successive FIR filters 160, 162 or 164.

It is to be noted that, with respect to the described method, modifications or improvements may be proposed without departing from the scope of the invention. For instance, it is clear that this processing method may be implemented in several manners, such as by means of wired electronic circuits or, alternatively, by means of a set of instructions stored in a computer-readable medium, said instructions replacing at least a part of said circuits and being executable under the control of a computer or a digital processor in order to carry out the same functions as fulfilled in said replaced circuits.

## Claims

1. A method of processing sequential sets of data (Si), each respective one of the sets comprising a respective data sequence (Di), and at least a first one of the sets also comprising a training sequence (Ti), the method comprising:
• filtering the data sequence (D1) of the first set (S1) using a filter (100) having adjustable filtering coefficients (Ci); **characterized by**:
• while filtering the data sequence (D1), processing the training sequence (T1) for deriving an optimum value for a specific one of the filtering coefficients;
• replacing a previous value of the specific filtering coefficient with the derived optimum value before filtering of another sequence of data (D2).

2. A method of processing of Claim 1 comprising equalizing the training sequence (Ti) using an equalizer having adjustable equalizing coefficients (Ci), the optimum value being a value, at the end of the equalization, of an equalizing coefficient with a same position as the specific filtering coefficient.

3. A method of processing of Claim 2, wherein an equalizing coefficient is adjusted using an update amount being a product of a first value of the training sequence and a second value of an error signal, the error signal representing a discrepancy between a signal resulting from the filtering of the training sequence by the equalizer and a reference training sequence known by the equalizer.

4. The method of Claim 1, wherein at least one filtering coefficient is modified from a blind equalization of the data sequence.

5. A processing device (10) for processing sequential sets of data, each respective one of the sets comprising a respective data sequence, and at least a first one of the sets comprising a training sequence, the processing device comprising:
• a filter (100) having adjustable filtering coefficients;
• an updating circuit (200);
**characterized in that** the updating circuit is adapted:
for processing the training sequence (T1) of the first set (S1), while the filtering circuit (100) filters the data sequence (D1) of the first set, in order to derive an optimum value of at least a specific one of the filtering coefficients (Ci), and
for supplying the filter (100) with the optimum value before filtering of another data sequence (D2).

6. A processing device of Claim 5, wherein the filter comprises:
• a forward equalizer (FE);
• a decision feedback equalizer (DFE).

7. The processing device of Claim 5, wherein the updating circuit (200) comprises an equalizer having adjustable equalizing coefficients for equalizing the training sequence, the optimum value being a value, at the end of the coefficient, of an equalizing coefficient with same position as the specific coefficient.

8. The processing device of Claim 5, wherein the updating circuit comprises:
• an equalizer having adjustable equalizing coefficients for equalizing the training sequence resulting in a equalized training sequence;
• a first memory unit (202) for storing values of the training sequence;
• a second memory (201) for storing values of the equalizing coefficients;
• an error calculator (206) for deriving an error sequence from the equalized training sequence and a reference training sequence known to the updating circuit;
• a calculator for deriving the optimum value using an updating amount as a product of a first value of the training sequence, a second value of an adaptation parameter and a third value of the error sequence.

9. The Processing device of Claim 7, wherein the equalizer comprises:
• a multiplier (207) for multiplying, during the prescribed period, each respective value of the equalization coefficients with a respective value of the training sequence;
• an accumulator for accumulating a sum of the products derived by the multiplier.

10. The processing device of Claim 5, wherein the filter is adapted to modify at least one of the coefficients by performing a blind equalization of the data sequence.

11. The processing device of Claim 5, wherein the filter comprises:
• a plurality of finite impulse response filters (160, 162, 164) connected in series;
• at least one configurable delay cell (166) respectively located between two respective successive finite impulse response filters for introducing a respective delay between the respective finite impulse response filters.

12. The processing device of Claim 11, wherein the updating circuit comprises:
• a digital signal processing unit (DSP) for deriving respective optimum values of the filtering coefficients;
• a delay calculator (220) for determining the delays from the derived optimum values.

## Patentansprüche

1. Verfahren zum Verarbeiten sequentieller Datensätze (Si), wobei jeder betreffender Satz eine betreffende Datenfolge (Di) aufweist, und wobei wenigstens ein erster Satz der Sätze ach eine Trainingsfolge (Ti) aufweist, wobei das Verfahren die nachfolgenden Verfahrensschritte umfasst:
- das Filtern der Datenfolge (D1) des ersten Satzes (S1) unter Verwendung eines Filters (100) mit einstellbaren Filterkoeffizienten (Ci), **gekennzeichnet durch**:
- die Verarbeitung - während der Filterung der Datenfolge (D1) - der Trainingsfolge (T 1) zum Herleiten eines optimalen Wertes für einen spezifischen Filterkoeffizienten;
- den Ersatz eines vorhergehenden Wertes des spezifischen Filterkoeffizienten **durch** den hergeleiteten optimalen Wert vor der Filterung einer anderen Datenfolge (D2).

2. Verfahren zum Verarbeiten nach Anspruch 1 umfassend: das Entzerren der Trainingsfolge (Ti) unter Verwendung eines Entzerrers mit einstellbaren Entzerrungskoeffizienten (Ci), wobei der optimale Wert ein Wert ist, am Ende der Entzerrung, eines Entzerrungskoeffizienten mit einer gleichen Position wie der spezifische Filterkoeffizient.

3. Verfahren zum Verarbeiten nach Anspruch 2 wobei ein Entzerrungskoeffizient unter Verwendung eines Aktualisierungsbetrags eingestellt wird, wobei dieser Betrag ein Produkt aus einem ersten Wert der Trainingsfolge und einem zweiten Wert eines Fehlersignals ist, wobei das Fehlersignal eine Diskrepanz zwischen einem Signal, herrührend aus der Filterung der Trainingsfolge durch den Entzerrer und einer bei dem Entzerrer bekannten Bezugstrainingsfolge ist.

4. Verfahren nach Anspruch 1, wobei wenigstens ein Filterkoeffizient von einer unbekannten Entzerrung der Datenfolge modifiziert wird.

5. Verarbeitungsanordnung (10) zum Verarbeiten sequentieller Datensätze, wobei jeder betreffende Satz eine betreffende Datenfolge aufweist, und wobei wenigstens ein erster Satz eine Trainingsfolge aufweist, wobei die Verarbeitungsanordnung Folgendes umfasst:
- ein Filter (100) mit einstellbaren Filterkoeffizienten;
- eine Aktualisierungsschaltung (200);
**dadurch gekennzeichnet, dass** die Aktualisierungsschaltung vorgesehen ist:
zum Verarbeiten der Trainingssequenz (T1) des ersten Satzes (S1), während die Filterschaltung (100) die Datenfolge (D1) des ersten Satzes filtert um einen optimalen Wert wenigstens eines spezifischen Filterkoeffizienten (Ci) herzuleiten, und
zum Zuführen des optimalen Wertes zu dem Filter (100) vor der Filterung eines anderen Datenfolge (D2).

6. Verarbeitungsanordnung nach Anspruch 5, wobei das Filter Folgendes umfasst:
- einen Vorwärtsentzerrer (FE);
- einen Entscheidungsrückkopplungsentzerrer (DFE).

7. Verarbeitungsanordnung nach Anspruch 5, wobei die Aktualisierungsschaltung (200) einen Entzerrer mit einstellbaren Entzerrungskoeffizienten aufweist zum Entzerren der Trainingsfolge, wobei der optimale Wert, am Ende der Entzerrung, ein Wert eines Entzerrungskoeffizienten mit derselben Position wie der spezifische Koeffizient ist.

8. Verarbeitungsanordnung nach Anspruch 5, wobei die Aktualisierungsschaltung Folgendes umfasst:
- einen Entzerrer mit einstellbaren Entzerrungskoeffizienten zum Entzerren der Trainingsfolge, was zu einer entzerrten Trainingsfolge führt;
- eine erste Speichereinheit (202) zum Speichern von Werten für die Trainingsfolge;
- eine zweite Speichereinheit (201) zur Speicherung von Werten der Entzerrungskoeffizienten;
- einen Fehlerrechner (206) zum herleiten einer Fehlerfolge aus der entzerrten Trainingsfolge und einer aus der Aktualisierungsschaltung bekannten Bezugstrainingsfolge;
- einen Rechner zum Herleiten des optimalen Wertes unter Verwendung eines Aktualisierungsbetrags als ein Produkt aus einem ersten Wert der Trainingsfolge, einem zweiten Wert eines Anpassungsparameters und einem dritten Wert der Fehlerfolge.

9. Verarbeitungsanordnung nach Anspruch 7, wobei der Entzerrer Folgendes umfasst:
- einen Multiplizierer (207) zum während der vorgeschriebenen Periode Multiplizieren jedes betreffenden Wertes der Entzerrungskoeffizienten mit einem betreffenden Wert der Trainingsfolge;
- einen Akkumulator zum Akkumulieren einer Summe der Produkte, hergeleitet durch den Multiplizierer.

10. Verarbeitungsanordnung nach Anspruch 5, wobei das Filter dazu vorgesehen ist, wenigstens einen spezifischen Koeffizienten **dadurch** zu modifizieren, dass eine unbekannte Entzerrung der Datenfolge durchgeführt wird.

11. Verarbeitungsanordnung nach Anspruch 5, wobei das Filter Folgendes umfasst:
- eine Anzahl in Reihe geschalteter endlicher Impulsantwortfilter (160, 162, 164);
- wenigstens eine konfigurierbare Verzögerungszelle (166) zwischen jeweils zwei betreffenden aufeinander folgenden endlichen Impulsantwortfiltern zum Einführen einer betreffenden Verzögerung zwischen die betreffenden endlichen Impulsantwortfilter.

12. Verarbeitungsanordnung nach Anspruch 11, wobei die Aktualisierungsschaltung Folgendes umfasst:
- eine digitale Signalverarbeitungseinheit (DSP) zum Herleiten betreffender optimaler Werte der Filterkoeffizienten;
- einen Verzögerungsrechner (220) zum Ermitteln der Verzögerungen aus den hergeleiteten optimalen Werten.

## Revendications

1. Procédé de traitement d'ensembles séquentiels de données (Si), chacun des ensembles respectifs comprenant une séquence de données respectives (Di), et au moins un premier des ensembles comprenant également une séquence d'apprentissage (Ti), le procédé comprenant:
- le filtrage de la séquence de données (D1) du premier ensemble (S1) en utilisant un filtre (100) ayant des coefficients de filtrage ajustables (Ci), **caractérisé par**:
- pendant le filtrage de la séquence de données (D1), le traitement de la séquence d'apprentissage (T1) pour dériver une valeur optimale d'un coefficient spécifique parmi les coefficients de filtrage;
- le remplacement d'une valeur précédente du coefficient de filtrage spécifique par la valeur optimale dérivée avant le filtrage d'une autre séquence de données (D2).

2. Procédé de traitement selon la revendication 1, comprenant une égalisation de la séquence d'apprentissage (Ti) en utilisant un égaliseur ayant des coefficients d'égalisation ajustables (Ci), la valeur optimale étant une valeur, à la fin de l'égalisation, d'un coefficient d'égalisation avec une position identique au coefficient de filtrage spécifique.

3. Procédé de traitement selon la revendication 2, dans lequel un coefficient d'égalisation est ajusté en utilisant une quantité de mise à jour qui est un produit d'une première valeur de la séquence d'apprentissage et d'une deuxième valeur d'un signal d'erreur, le signal d'erreur représentant un écart entre un signal résultant du filtrage de la séquence d'apprentissage par l'égaliseur et une séquence d'apprentissage de référence connue par l'égaliseur.

4. Procédé selon la revendication 1, dans lequel au moins un coefficient de filtrage est modifié à partir d'une égalisation aveugle de la séquence de données.

5. Dispositif de traitement (10) pour traiter des ensembles séquentiels de données, chacun des ensembles respectifs comprenant une séquence de données respective, et au moins un premier des ensembles comprenant une séquence d'apprentissage, le dispositif de traitement comprenant:
- un filtre (100) ayant des coefficients de filtrage ajustables;
- un circuit de mise à jour (200);
**caractérisé en ce que** le circuit de mise à jour est adapté pour:
traiter la séquence d'apprentissage (T1) du premier ensemble (S1), pendant que le circuit de filtrage (100) filtre la séquence de données (D1) du premier ensemble, de façon à dériver une valeur optimale d'au moins un coefficient spécifique parmi les coefficients de filtrage (Ci), et
fournir au filtre (100) la valeur optimale avant le filtrage d'une autre séquence de données (D2).

6. Dispositif de traitement selon la revendication 5, dans lequel le filtre comprend:
- un égaliseur avant (FE);
- un égaliseur à rétroaction de décision (DFE).

7. Dispositif de traitement selon la revendication 5, dans lequel le circuit de mise à jour (200) comprend un égaliseur ayant des coefficients d'égalisation ajustables pour égaliser la séquence d'apprentissage, la valeur optimale étant une valeur, à la fin du coefficient, d'un coefficient d'égalisation avec une même position que le coefficient spécifique.

8. Dispositif de traitement selon la revendication 5, dans lequel le circuit de mise à jour comprend:
- un égaliseur ayant des coefficients d'égalisation ajustables pour égaliser la séquence d'apprentissage résultant en une séquence d'apprentissage égalisée;
- une première unité mémoire (202) pour stocker des valeurs de la séquence d'apprentissage;
- une deuxième mémoire (201) pour stocker des valeurs des coefficients d'égalisation;
- un calculateur d'erreur (206) pour dériver une séquence d'erreur de la séquence d'apprentissage égalisée et d'une séquence d'apprentissage de référence connue au circuit de mise à jour;
- un calculateur pour dériver la valeur optimale en utilisant une quantité de mise à jour comme un produit d'une première valeur de la séquence d'apprentissage, d'une deuxième valeur d'un paramètre d'adaptation et d'une troisième valeur de la séquence d'erreur.

9. Dispositif de traitement selon la revendication 7, dans lequel l'égaliseur comprend:
- un multiplier (207) pour multiplier, pendant la période prescrite, chaque valeur respective des coefficients d'égalisation par une valeur respective de la séquence d'apprentissage;
- un accumulateur pour accumuler une somme des produits dérivés par le multiplieur.

10. Dispositif de traitement selon la revendication 5, dans lequel le filtre est aménagé pour modifier au moins un des coefficients en réalisant une égalisation aveugle de la séquence de données.

11. Dispositif de traitement selon la revendication 5, dans lequel le filtre comprend:
- une pluralité de filtres non récursifs (160, 162, 164) connectés en série;
- au moins une cellule à retard configurable (166) respectivement situé entre deux filtres non récursifs successifs respectifs pour introduire un délai respectif entre les filtres non récursifs respectifs.

12. Dispositif de traitement selon la revendication 11, dans lequel le circuit de mise à jour comprend:
- une unité de traitement de signal numérique (DSP) pour dériver des valeurs optimales respectives des coefficients de filtrage;
- un calculateur de délai (220) pour déterminer les délais à partir des valeurs optimales dérivées.
